# EUROPEAN PATENT SPECIFICATION

(11) **EP 1 482 240 B1**
(45) Date of publication and mention of the grant of the patent: **26.03.2008**
(21) Application number: 04425381.3
(22) Date of filing: 26.05.2004
(51) Int. Cl.: F21V 14/02, F21V 11/10, F21V 5/04, F21S 8/00

(54) **Device for adjusting light intensity for discharge lamp projectors**
Vorrichtung zur Einstellung der Lichtintensität für Projektoren mit Entladungslampe
Dispositif de reglage de l'intensité lumineuse pour projecteurs avec lampe a decharge

(30) Priority: 30.05.2003 IT RM20030271
(43) Date of publication of application: 01.12.2004
(73) Proprietor: De Sisti Lighting S.p.A., 00195 Roma (IT)
(72) Inventor: De Sisti, Mario, 00040 Albano Laziale (RM) (IT); De Sisti, Fabio, 00040 Albano Laziale (RM) (IT)
(74) Representative: Iannone, Carlo Luigi

(56) References cited:
- EP-A- 0 402 845
- US-A- 2 558 964
- US-A- 4 232 359
- US-A- 4 338 654

## Description

The present invention relates to a device for adjusting light intensity for discharge lamp projectors.

More specifically, the invention relates to a device of the above kind allowing to obtain an adjustment of intensity avoiding all the drawbacks of the known systems.

As it is well known, operation of discharge lamps is based on a voltaic arc determined by the discharge between two electrodes. It is also known that it is not possible to obtain in this kind of lamps an adjustment of intensity in the range between 0% and 100%, as it is possible for filament lamps, since it would cause the switching off of the arc and in any case a very unstable operation at the intermediate power values.

At present, to obtain the adjustment of the light intensity of the discharge lamp, a mechanical shutter is mounted in front of the projector, making it possible to vary the light intensity, blocking the light rays emitted from the projector.

This kind of solution, even if used since many years, is characterised by some drawbacks, among which it is possible to mention a remarkable increase of weight, sizes and unbalancing of the weight with respect to the fulcrum of the projector, as well as a remarkable increase of total costs.

Mainly, said solution induces geometric aberrations of the emitted light beam, reducing the light efficiency of the projector when the shutter is fully open.

In view of the above, it is well evident the advantage of having at disposal a device as the one suggested according to the present invention, allowing to solve all the above mentioned problems.

US 2,558,964 describes an iris protection apparatus for high intensity spotlights.

EP-A-0 402 845, on the basis of which it has been drafted precharacterising portion of claim 1, describes a device for adjusting the light intensity for a discharge lamp projector comprising an optical assembly comprised of a discharge lamp and a mirror, and of a Fresnel lens, in front of the lamp of said optical assembly, a shutter, provided between the optical assembly and the Fresnel lens, in correspondence of the focus of the optical assembly.

It is therefore specific object of the present invention a device for adjusting light intensity for discharge lamp projectors comprising an optical assembly comprised of a discharge lamp and a spherical mirror, and of a Fresnel lens, provided in front of the lamp of said optical assembly, characterised in that an iris diaphragm is provided in said optical assembly, in front of the lamp, in correspondence of the focus of the optical assembly, and between the lamp and the Fesnel lens, and in that said optical assembly, including the iris diaphragm, is movable along a longitudinal axis between two different foci, respectively a "flood" or "large beam" point and a "spot" or "narrow beam" point.

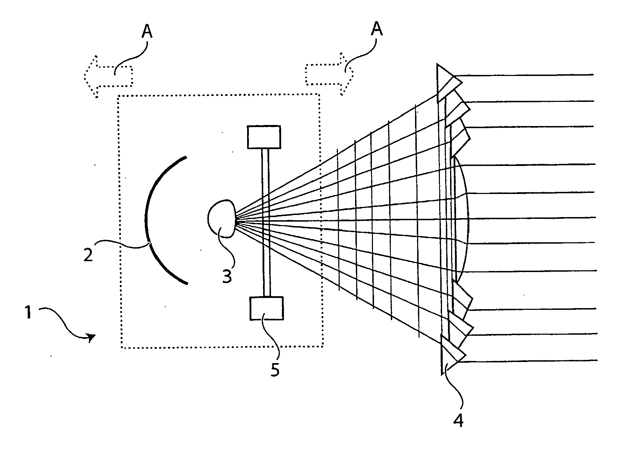

The present invention will be now described, for illustrative but not limitative purposes, according to its preferred embodiment, with particular reference to the figure of the enclosed drawing showing a schematic view of an embodiment

Observing now the figure of the enclosed drawing, it is shown a device according to the invention, providing an assembly 1, comprising a spherical mirror 2 and a lamp 3, said assembly being movable according to arrows A shown in the figure.

In front of the movable assembly 1 it is provided a Fresnel lens 4, that must create the light beam.

According to the invention, an iris diaphragm 5 is provided on said optical assembly, in correspondence of the focus of the lamp 3.

The use of an iris diaphragm 5 provided close to the lamp 3 within a Fresnel 4 lens projector, interposed between the optical assembly 1 inside the projector and the lens 4, and integral with the movable element, is the most characterising feature according to the invention.

As it is well known, in a Fresnel lens, the assembly 1 must be moved between two foci, to allow the variation of the opening of the light beam emitted from the projector (FLOOD = large beam = optical assembly 1 placed close to the lens 4; SPOT = narrow beam = optical beam 1 placed on the focus farther from the lens 4).

During this run, serving to focus the beam, the incidence angle of the concentric light rays emitted from the inner optical assembly 1 (lamp 3 - mirror 2) on the lens varies.

By using an iris diaphragm 5 provided close to the light source 3, moving integrally with the latter source along the optical axis, it is reproduced the focus of the optical assembly at the centre of the iris, allowing a modulation of the light amount without altering the geometry and the direction of the (concentric) light rays, but only blocking the amount of the same.

Summarising, the device according to the invention allows to adjust light intensity (dimmer effect) acting on the light rays emitted from the inner optical assembly 1, without modifying the direction and without creating any shadow, since it acts on the beam before the Fresnel lens 4.

By the device according to the invention, it is realised a kind of (integrated) mechanical optical-dimmer within the projector, so that a weight, cost and size reduction is obtained with respect to the known solutions providing mechanical dimmers mounted in front of the projectors.

Furthermore, by the solution according to the invention, photometric features, uniformity of emitted light and light efficiency of the projector are obtained without the influence of the presence of the inventive device, since iris is fully open the spot and flood values of light intensity, amplitude and uniformity of the light beam correspond to those of the same standard projector without mechanical dimmer, this result not being obtained by the conventional mechanical dimmers, since they are mounted after the Fresnel lens introducing optical aberrations (not uniform light beam) and often, according to the various specific cases, influence the light emission reducing its intensity, also when they are completely open (for example horizontal or vertical blade shutters).

Furthermore, thanks to the intrinsic design economy of the system with respect to what is available today on the market, the solution according to the invention, if used on small size projectors mounting the various kinds of low electric power and high luminous efficiency discharge lamps available on the market, allows to expand the use of an energy saving technology to different professional fields (video production, movies, events, fashion, shows, theatre and architecture).

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Device for adjusting light intensity for discharge lamp projectors comprising an optical assembly (1) comprised of a discharge lamp (3) and a spherical mirror (2), and of a Fresnel lens (4), provided in front of the lamp (3) of said optical assembly (1), **characterised in that** an iris diaphragm (5) is provided in said optical assembly (1), in front of the lamp (3), in correspondence of the focus of the optical assembly (1), and between the lamp (3) and the Fesnel lens (4), and **in that** said optical assembly (1), including the iris diaphragm 5), is movable along a longitudinal axis between two different foci, respectively a "flood" or "large beam" point and a "spot" or "narrow beam" point.

## Patentansprüche

1. Vorrichtung zur Einstellung der Lichtintensität für Entladungslampenprojektoren, umfassend eine optische Anordnung (1) bestehend aus einer Entladungslampe (3) und einem sphärischen Spiegel (2) und einer Fresnel-Linse (4), die vor der Lampe (3) der optischen Anordnung (1) angeordnet ist, **dadurch gekennzeichnet, dass** eine Irisblende (5) in der optischen Anordnung (1) vor der Lampe (3) in Übereinstimmung mit dem Brennpunkt der optischen Anordnung (1) und zwischen der Lampe (3) und der Fresnel-Linse (4) vorgesehen ist, und dass die optische Anordnung (1) einschließlich der Irisblende (5) entlang einer Längsachse beweglich ist zwischen zwei verschiedenen Brennpunkten bzw. einem "Flutlicht"- oder "Großstrahl"-Punkt und einem "Spot"- oder "Schmalstrahl"-Punkt.

## Revendications

1. Dispositif de réglage de l'intensité lumineuse pour des projecteurs avec lampe à décharge comprenant un montage optique (1) constitué d'une lampe à décharge (3) et d'un miroir sphérique (2), et une lentille de Fresnel (4), prévue devant la lampe (3) dudit montage optique (1), **caractérisé en ce qu'**un diaphragme à iris (5) est prévu dans ledit montage optique (1), devant la lampe (3), en correspondance avec le foyer du montage optique (1), et entre la lampe (3) et la lentille de Fresnel (4), et **en ce que** ledit montage optique (1), y compris le diaphragme à iris (5), se déplace suivant un axe longitudinal entre deux foyers différents, respectivement un point d'éclairage 'diffus' ou 'à faisceau large' et un point d'éclairage 'ponctuel' ou 'à faisceau étroit'.
